Europäisches Patentamt

European Patent Office

Office européen des brevets

(19)

(11) Veröffentlichungsnummer: **0 152 543**
B1

## (12) EUROPÄISCHE PATENTSCHRIFT

(45) Veröffentlichungstag der Patentschrift:
18.01.89

(51) Int. Cl.⁴: **H 04 N  5/68,** H 04 N  3/20

(21) Anmeldenummer: **84113510.6**

(22) Anmeldetag: **09.11.84**

(54) **Schaltungsanordnung für eine Bildröhre.**

(30) Priorität: **22.02.84  DE 3407388**

(43) Veröffentlichungstag der Anmeldung:
**28.08.85 Patentblatt 85/35**

(45) Bekanntmachung des Hinweises auf die Patenterteilung:
**18.01.89 Patentblatt 89/3**

(84) Benannte Vertragsstaaten:
**DE FR GB IT**

(56) Entgegenhaltungen:
**DE-A- 3 240 708
DE-B- 1 762 716
US-A- 4 042 858**

(73) Patentinhaber: **Blaupunkt-Werke GmbH,
Robert-Bosch-Strasse 200, D-3200 Hildesheim (DE)**

(72) Erfinder: **Black, Karl-Heinz, Dipl.-Ing.,
Kunibertstrasse 4A, D-3200 Hildesheim (DE)**
Erfinder: **Schuchardt, Günter, Grad.-Ing., Himmelsthürer
Strasse 3, D-3200 Hildesheim (DE)**

(74) Vertreter: **Eilers, Norbert, Dipl.-Phys., Blaupunkt-Werke
GmbH Robert-Bosch-Strasse 200, D-3200 Hildesheim
(DE)**

**Beschreibung**

Die Erfindung betrifft eine Schaltungsanordnung für eine Bildröhre mit einem Schirmgitter, an welchem eine einstellbare Schirmgitterspannung anliegt.

Für den ordnungsgemässen Betrieb einer Bildröhre — etwa bei einem Fernsehempfänger oder einem Monitor — ist es neben der Ansteuerung mit den Video-Signalen unter anderem erforderlich, der Bildröhre eine Hochspannung sowie eine Fokusspannung für die Bildschärfe und eine Schirmgitterspannung für die Festlegung des Arbeitspunktes zuzuführen. Die betreffenden Spannungen werden bekanntlich im Hochspannungsteil im Zusammenhang mit der Horizontalablenkung erzeugt, wobei der Hochspannungsteil den üblichen Hochspannungstransformator umfasst.

Es ist aus den Schaltbildern der Geräteserie FM 130 der Blaupunkt-Werke GmbH bekannt, die drei genannten Spannungen (nach erfolgter Gleichrichtung) auf der Sekundärseite des Hochspannungstransformators mittels eines Ohmschen Spannungsteilers abzugreifen. Letzterer besitzt unter anderem ein Potentiometer für die Schirmgitterspannung, so dass diese auf den gewünschten Wert einstellbar ist.

Neben der Einstellmöglichkeit der Schirmgitterspannung ist beim Betrieb einer Bildröhre noch ein weiterer Aspekt von Bedeutung, welcher in ansich bekannter Weise Schutzmassnahmen zur Vermeidung eines Einbrennfleckes auf dem Schirm der Bildröhre betrifft.

Bei einem Defekt der Videoendstufen für die Video-Signale kann nämlich der höchstzulässige Strahlstrom der Bildröhre überschritten und die Bildröhre dadurch beschädigt werden.

Es ist schon eine Schutzschaltung vorgeschlagen worden, siehe deutsche Patentanmeldung P 32 40 708.4 (DE-A1-3 240 708 Veröffentlichungstag 10. 5. 1984), bei welcher mit Hilfe einer Schwellwertschaltung der Spannungsabfall an einem im Stromkreis des Strahlstromes liegenden Widerstand gemessen und ein Schaltimpuls erzeugt wird. Der Schaltimpuls steuert einen Thyristor an, welcher mit der Folge durchschaltet, dass die Schirmgitterspannung gegen Masse kurzgeschlossen wird. Die abgeschaltete Schirmgitterspannung unterdrückt den Anodenstrom bzw. sperrt den Strahlstrom, so dass ein Einbrennfleck verhindert wird.

Die beschriebenen Schaltungsmassnahmen für den Betrieb einer Bildröhre — nämlich die Einstellungsmöglichkeit der Schirmgitterspannung sowie die Schutzschaltung — können zwar in gewünschter Weise einen ordnungsgemässen Betrieb der Bildröhre ermöglichen, allerdings besteht ein Nachteil darin, dass der Schaltungsaufwand recht gross ist. Neben den damit erhöhten Kosten kann dadurch auch die Störanfälligkeit zunehmen.

Der Erfindung liegt die Aufgabe zugrunde, eine Schaltungsanordnung für eine Bildröhre zu schaffen, welche weniger störanfällig und einfach zu realisieren ist und sich durch einen geringen Aufwand auszeichnet.

Die Lösung dieser Aufgabe erfolgt bei der im Oberbegriff des Anspruchs 1 genannten Schaltungsanordnung dadurch, dass zur Beeinflussung der Schirmgitterspannung ein aktives, mit einer Steuerspannung beaufschlagtes Element vorgesehen ist, welches in Abhängigkeit von der Amplitude der Steuerspannung sowohl ein Spannungseinsteller wie auch ein beim Überschreiten des Strahlstroms wirksamer elektronischer Schalter ist.

Die Erfindung basiert auf der konsequenten Ausnutzung der Tatsache, dass sich ein aktives Element — vorzugsweise ein Transistor — bei entsprechender Ansteuerung sowohl als ein Spannungseinsteller (durch Veränderung des inneren Widerstandes) wie auch als ein elektronischer Schalter einsetzen lässt. Dadurch wird eine Kombination zweier Schaltungsanordnungen ermöglicht, die bisher stets in getrennter Ausführung vorgesehen worden sind.

Die erfindungsgemässe Schaltungsanordnung erlaubt nämlich sowohl die erforderliche Einstellung der Schirmgitterspannung als auch die Verwendung als eine Schutzschaltung zur Verhinderung eines Einbrennfleckes auf dem Schirm der Bildröhre. Durch diese überraschende Kombination mittels eines entsprechend angesteuerten Transistors lässt sich der bisherige Schaltungsaufwand in vorteilhafter Weise verringern.

Zum Zwecke einer Schutzschaltung wird der Transistor bei der Erfindung in ansich bekannter Weise von der weiter oben schon beschriebenen Schwellwertschaltung angesteuert, mit der Folge, dass das Schirmgitter gegen Masse kurzgeschlossen und der Strahlstrom gesperrt wird.

Um die Schirmgitterspannung und damit den Arbeitspunkt der Bildröhre einstellen zu können, wird der Transistor nach dem Spannungsteilerprinzip als ein variabler Widerstand eingesetzt, wobei eine Änderung des Widerstandswertes des Transistors — und damit einhergehend eine Änderung der Schirmgitterspannung — durch eine der Basis zugeführte relativ geinge Gleichspannung bewirkt werden kann.

Hierbei ist als ein weiterer bedeutsamer Vorteil zu nennen, dass es sich hier um eine sogenannte «kalte» Einstellung der Schirmgitterspannung handelt. Durch Verändern einer relativ geringen Steuerspannung an der Basis des Transistors von nur einigen Volt kann nämlich auf einfache Weise die Einstellung der sehr hohen Schirmgitterspannung (z.B. zwischen 350V und 850V) vorgenommen werden.

Bei der eingangs genannten Schirmgittereinstellung mittels Potentiometer erfolgt demgegenüber die Beeinflussung der Schirmgitterspannung direkt am Abgriffpunkt des Potentiometers, also auf einem sehr hohen Spannungspotential.

Durch Alterung der verwendeten Potentiometer kann sich ferner eine Änderung der Kennlinie des Potentiometers einstellen, wodurch eine unerwünschte Änderung der Schirmgitterspannung eintritt. Dieses Problem stellt sich bei der erfindungsgemässen Einstellung der Schirmgitterspannung mittels eines Transistors nicht.

Der bei der Erfindung in der neuen Schaltungsanordnung verwendete Transistor erfüllt also eine Doppelfunktion, wobei die Arbeitsweise sowohl hinsichtlich der Schutzschaltung als auch bei der Einstellung der Schirmgitterspannung äusserst zuverlässig ist.

Die Erzeugung der Steuerspannung zum Zwecke der Einstellung der Schirmgitterspannung kann in zweckmässiger Ausgestaltung der Erfindung dadurch erfolgen, dass einem RC-Glied einer Ansteuerschaltung Impulse zugeführt werden, deren Impulsbreite veränderbar ist. Am Ausgang des RC-Gliedes steht dann eine Gleichspannung als Steuerspannung zur Verfügung, deren Wert davon abhängt, wie gross die Impulsbreite der Impulse ist.

Diese Lösung besitzt den besonderen Vorteil, dass sie bei Fernsehempfängern der neueren Generation eingesetzt werden kann, welche eine digitale Signalverarbeitung besitzen. Bei einem digitalen Konzept stehen die erforderlichen Impulse ohne weiteres zur Verfügung. Eine einmal erfolgte «digitale» Einstellung der Schirmgitterspannung kann einfach in einem Speicher abgespeichert werden, wo der Wert der Schirmgitterspannung abrufbereit jederzeit zur Verfügung steht. Zudem erlaubt diese Lösung einen rechnergesteuerten Abgleich durch Abfragen ganz bestimmter Messpunkte des Fernsehgerätes. Neben des verringerten Schaltungsaufwandes und der Kombination der Schirmgitterspannungseinstellung und der Schutzschaltung bietet die Erfindung somit den Vorteil einer Einsatzmöglichkeit bei der zunehmenden Digitalisierung von Fernsehgeräten.

Andere zweckmässige Ausgestaltungen und Weiterbildungen der Erfindung sind Gegenstand der Unteransprüche und der Zeichnung zu entnehmen.

Nachfolgend wird die Erfindung anhand der in der Zeichnung dargestellten Ausführungsbeispiele näher erläutert. Es zeigen:

Fig. 1 ein Prinzipschaltbild einer bekannten Schaltung zur Einstellung der Schirmgitterspannung,

Fig. 2 eine Prinzipdarstellung einer vorgeschlagenen Schutzschaltung,

Fig. 3 ein Ausführungsbeispiel einer erfindungsgemässen Schaltungsanordnung,

Fig. 4 ein Diagramm zur Erläuterung der Funktion der Schaltungsanordnung gemäss Fig. 3,

Fig. 5 eine andere Ausführungsform einer erfindungsgemässen Schaltungsanordnung, und

Fig. 6 eine weitere Ausführungsform einer erfindungsgemässen Schaltungsanordnung.

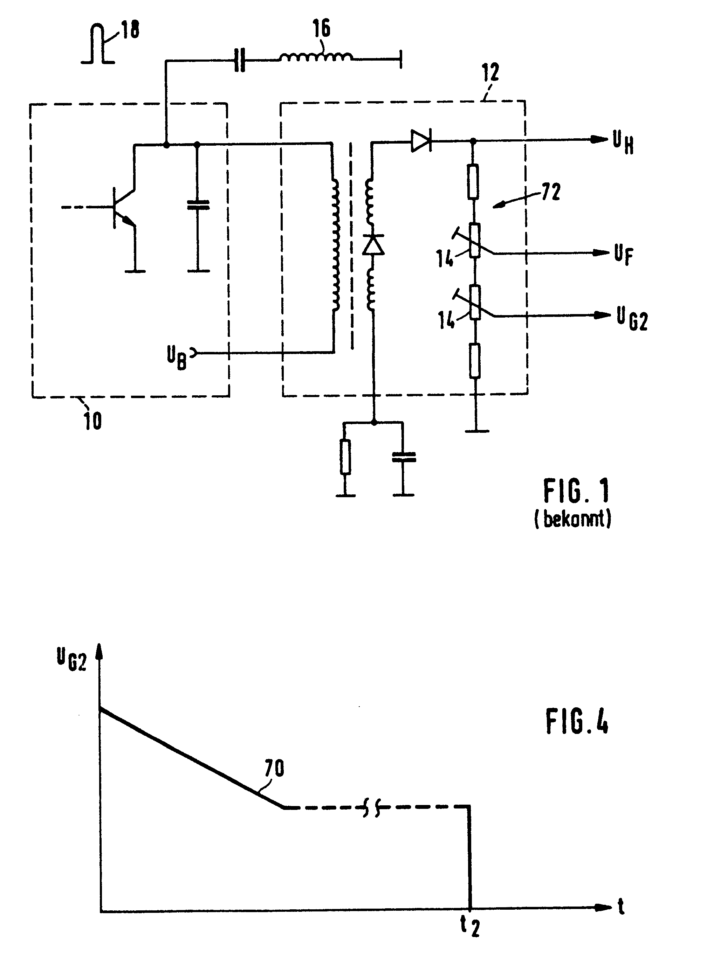

Unter der Bezugnahme auf Fig. 1 wird zunächst eine bekannte Schaltungsanordnung zur Einstellung der Schirmgitterspannung $U_{G2}$ erläutert. Eine Horizontalablenkstufe 10 speist einen Dioden-Split-Transformator (DST) 12, auf dessen Sekundärseite nach einer Gleichrichtung die Hochspannung $U_H$ entnommen wird. Die Primärseite des Dioden-Split-Transformators 12 ist mit Horizontalimpulsen 18 beaufschlagt und an eine Spannung $U_B$ angeschlossen. Ferner ist in Fig. 1 noch die Horizontalablenkspule 16 gezeigt.

Zwischen der Hochspannung $U_H$ und Masse befindet sich ein ohmscher Spannungsteiler 72 mit einem Doppelregler 14. Hier werden einstellbar die Fokusspannung $U_F$ und die Schirmgitterspannung $U_{G2}$ abgenommen. Die soweit beschriebene Schaltung erlaubt die erforderliche Spannungsversorgung einer Bildröhre und vor allem die Einstellung der Schirmgitterspannung $U_{G2}$.

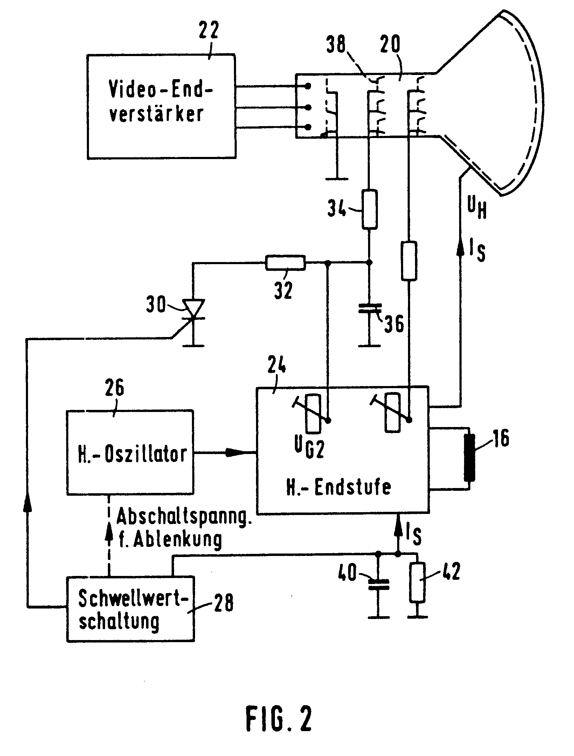

Mit der Schutzschaltung gemäss Fig. 2 lassen sich die nachteiligen Einbrennflecke bei einer Bildröhre 20 vermeiden. Wie voranstehend beschrieben, wird hier die einstellbare Schirmgitterspannung $U_{G2}$ einer Horizontalendstufe 24 entnommen und über einen Widerstand 34 dem Schirmgitter 38 zugeführt. Ausserdem wird die Horizontalablenkspule 16 von der Horizontalendstufe 24 gespeist.

Für die Signalsteuerung der Bildröhre 20 ist ein Video-Endverstärker 22 vorgesehen, und zur Ansteuerung der Horizontalendstufe 24 dient ein Horizontal-Oszillator 26.

Wesentliche Bestandteile der Schaltung gemäss Fig. 2 sind eine Schwellwertschaltung 28 und ein davon angesteuerter Thyristor 30, der über einen Widerstand 32 mit der Spannungszuführung für das Schirmgitter 38 verbunden ist. Der Verbindungspunkt der beiden Widerstände 32 und 34 ist über einen Kondensator 36 an Masse geschaltet.

Zur Messung des Strahlstromes $I_S$ ist ein Widerstand 42 vorgesehen, an dessen von Masse abgewandtem Ende eine Spannung erzeugt wird, die proportional zum Strahlstrom $I_S$ ist. Der Widerstand 42 ist von einem Kondensator 40 überbrückt, damit eine kurzzeitige Überschreitung des maximalen Strahlstromes — also sehr kleine helle Flächen auf dem Schirm der Bildröhre 20 — nicht berücksichtigt werden.

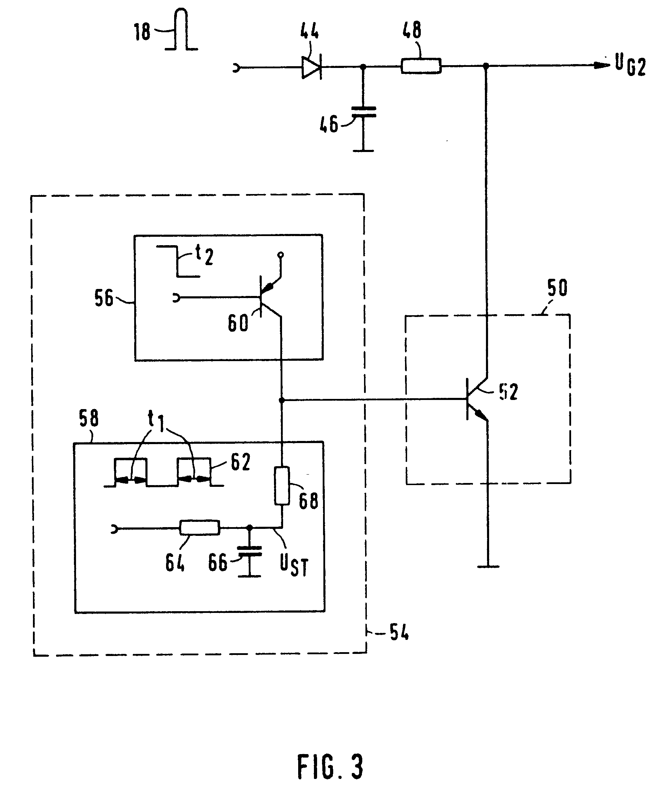

Die an dem Widerstand 42 erzeugte Spannung wird der Schwellwertschaltung 28 zugeführt, und wenn der Strahlstrom $I_S$ den höchst zulässigen Wert überschreitet, entsteht zur Zeit $t_2$ (vgl. Fig. 3) ein Impuls bzw. ein Spannungssprung, welcher an die Steuerelektrode des Thyristors 30 gelangt.

Der Thyristor 30 wird leitend und schliesst die Schirmgitterspannung $U_{G2}$ gegen Masse kurz. Der Widerstand 32 dient hier zur Begrenzung des Stromes. Infolge der abgeschalteten Schirmgitterspannung $U_{G2}$ wird der Anodenstrom der Bildröhre 20 so klein, dass gegebenenfalls auf ein Abschalten der Horizontalablenkung verzichtet werden kann (vg. die gestrichelt gezeichnete Linie zwischen der Schwellwertschaltung 28 und dem Horizontal-Oszillator 26).

Während bei den soweit beschriebenen Lösungen die Einstellung der Schirmgitterspannung $U_{G2}$ sowie die Schutzschaltung voneinander getrennt sind, werden diese Funktionen bei der erfindungsgemässen Schaltungsanordnung gemäss Fig. 3 auf überraschend einfache Weise miteinander verbunden, indem ein Transistor 52 eine Doppelfunktion sowohl als elektronischer Schalter als auch als Spannungseinsteller erhält.

Die einstellbare Schirmgitterspannung $U_{G2}$ wird durch Gleichrichtung von Horizontalimpulsen 18 mittels einer Diode 44 mit einem nachgeschalteten Kondensator 46 sowie einem Reihenwiderstand 48 erzeugt. Das der Diode 44 abgewandte Ende des Widerstandes 48 ist mit einem aktiven Element 50 — hier mit dem Kollektor des Transistors 52 — verbunden. Der Emitter des Transistors 52 liegt auf Masse, und der Basis des Transistors 52 wird von einer Ansteuerung 54 eine Steuerspannung $U_{ST}$ zugeführt.

Da der Transistor 52 bei der Erfindung eine Doppelfunktion erfüllt, sind für seine Ansteuerung eine erste Ansteuerschaltung 56 und eine zweite Ansteuerschaltung 58 vorgesehen, deren Ausgänge jeweils gemeinsam auf die Basis des Transistors 52 einwirken.

Die erste Ansteuerschaltung 56 besitzt unter anderem einen Transistor 60. Im übrigen kann die erste Ansteuerschaltung 56 entsprechend der anhand von Fig. 2 beschriebenen Schwellwertschaltung 28 aufgebaut sein. Wenn also ein höchstzulässiger Wert für den Strahlenstrom $I_S$ überschritten wird, entsteht zum Zeitpunkt $t_2$ ein Spannungssprung, welcher den Transistor 52 durchschaltet, und als Folge davon wird die Schirmgitterspannung $U_{G2}$ abgeschaltet. Die erste Ansteuerschaltung 56 ist also nur dann wirksam und von Einfluss auf den Transistor 52, wenn der Strahlstrom $I_S$ einen bestimmten Wert überschreitet.

Mit der zweiten Ansteuerschaltung 58 wird als Gleichspannung eine Steuerspannung $U_{ST}$ erzeugt, welche an die Basis des Transistors 52 gelangt. In Abhängigkeit dieser Ansteuerung verändert der Transistor 52, welcher Teil eines Spannungsteilers ist, seinen inneren Widerstand, so dass eine Einstellung der Schirmgitterspannung $U_{G2}$ möglich ist.

Die zweite Ansteuerschaltung 58 in Fig. 3 besitzt zwei in Reihe geschaltete Widerstände 64 und 68 sowie einen dazwischen nach Masse geschalteten Kondensator 66. Zur Erzeugung der gewünschten Steuerspannung $U_{ST}$ werden Impulse 62 verwendet, deren Impulsbreite $t_1$ veränderbar ist. In Abhängigkeit der Impulsbreite $t_1$ lässt sich somit die Steuerspannung $U_{ST}$ verändern, wodurch eine Einstellung der Schirmgitterspannung $U_{G2}$ bewirkt wird.

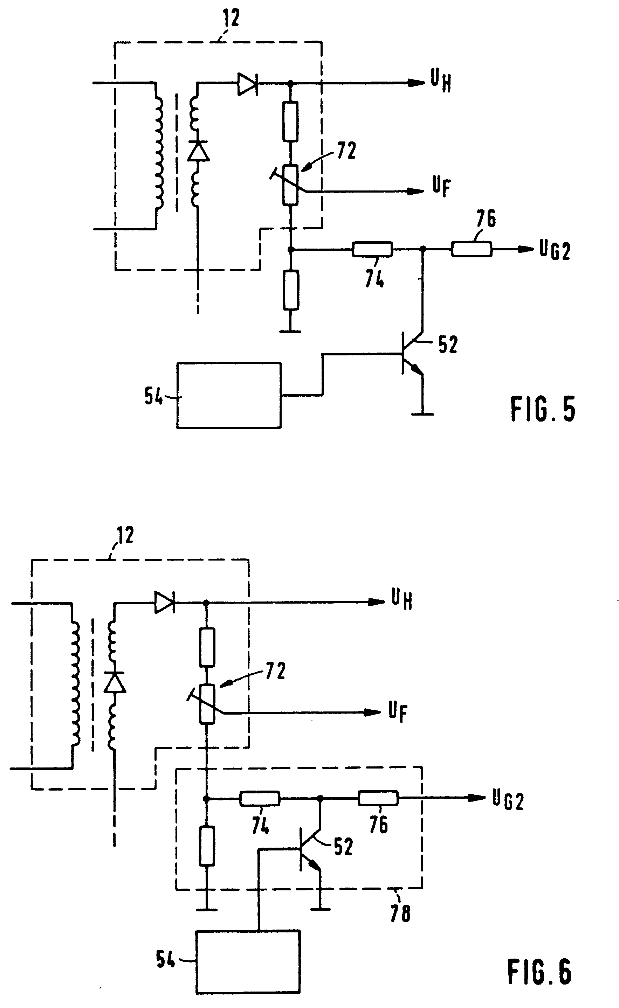

Anhand des Diagramms in Fig. 4 kann man den Spannungsverlauf 70 der Schirmgitterspannung $U_{G2}$ erkennen. Der erste schräg verlaufende Kurvenbereich umfasst beispielsweise Spannungswerte zwischen 850V und 350V, wobei sich diese Spannungswerte in Abhängigkeit der Steuerspannung $U_{ST}$ — und damit in Abhängigkeit der Impulsbreiten $t_1$ — einstellen. Solange der Strahlenstrom $I_S$ den zulässigen Wert nicht überschreitet und die erste Ansteuerschaltung 56 somit ohne Einfluss auf den Transistor 52 ist, unterliegt der Transistor allein der Wirkung der zweiten Ansteuerschaltung 58. Die beschriebene Erzeugung der für die Einstellung der Schirmgitterspannung $U_{G2}$ erforderlichen Steuerspannung $U_{ST}$ mittels der Impulse 62 ist vor allem bei Geräten von Vorteil, welche eine digitale Signalverarbeitung besitzen, denn hier stehen die benötigten Impulse 62 ohne weiteres zur Verfügung. Günstig ist dabei die Möglichkeit, die bei einer erfolgten Einstellung der Schirmgitterspannung $U_{G2}$ benötigten digitalen Impulse bzw. deren Impulsbreiten als digitale Werte in einem Speicher jederzeit abrufbereit zu speichern.

Wenn während des Betriebes der Bildröhre 20 der Strahlstrom $I_S$ seine Höchstgrenze überschreitet, entsteht der schon erwähnte Spannungssprung zum Zeitpunkt $t_2$, und wie in Fig. 4 ersichtlich, wird dann in erwünschter Weise die Schirmgitterspannung $U_{G2}$ abgeschaltet, um einen Einbrennfleck zu verhindern.

In den Fig. 5 und 6 sind weitere Ausführungsbeispiele für eine erfindungsgemässe Schaltungsanordnung dargestellt. Abweichend von Fig. 3, wo die einstellbare Schirmgitterspannung $U_{G2}$ sozusagen direkt durch Gleichrichtung der Horizontalimpulse 18 gewonnen wird, ist in Fig. 5 — vergleichbar mit Fig. 1 — auf der Sekundärseite des Dioden-Split-Transformators 12 ein ohmscher Spannungsteiler 72 vorgesehen, von dem über Widerstände 74 und 76 die Schirmgitterspannung $U_{G2}$ abgegriffen wird. Zwischen den beiden Widerständen ist wiederum der Transistor 52 nach Masse geschaltet, dessen Basis von der Ansteuerung 54 beaufschlagt wird. Unterschiedlich gegenüber Fig. 3 ist hier also lediglich der Abgriff der Spannung, während die Funktion der erfindungsgemässen Schaltungsordnung im übrigen die gleiche bleibt.

Auch in Fig. 6 wird die Spannung an dem ohmschen Spannungsteiler 72 auf der Sekundärseite des Dioden-Split-Transformators 12 abgegriffen. Allerdings sind hier die Widerstände 74 und 76 sowie der Transistor 52 als Bestandteil einer Dickschichtschaltung 78 ausgebildet. Die Ansteuerung 54 mit der ersten Ansteuerschaltung 56 und der zweiten Ansteuerschaltung 58 befindet sich ausserhalb der Dickschichtschaltung 78.

**Patentansprüche**

1. Schaltungsanordnung für eine Bildröhre mit einem Schirmgitter, an welchem eine einstellbare Schirmgitterspannung anliegt, dadurch gekennzeichnet, dass zur Beeinflussung der Schirmgitterspannung ($U_{G2}$) ein aktives, mit einer Steuerspannung ($U_{St}$) beaufschlagtes Element (50) vorgesehen ist, welches in Abhängigkeit von der Amplitude der Steuerspannung ($U_{St}$) sowohl ein Spannungseinsteller wie auch ein beim Überschreiten des Strahlstroms wirksamer elektronischer Schalter ist.

2. Schaltungsanordnung nach Anspruch 1, dadurch gekennzeichnet, dass das aktive Element (50) ein Transistor (52) ist, dessen Basis die Steuerspannung ($U_{St}$) zugeführt ist.

3. Schaltungsanordnung nach Anspruch 2, dadurch gekennzeichnet, dass der Emitter des Transistors (52) auf Massepotential liegt, und dass der Kollektor mit der Schirmgitterspannungszuführung verbunden ist.

4. Schaltungsanordnung nach einem der vorhergehenden Ansprüche 1-3, dadurch gekennzeichnet, dass die Steuerspannung ($U_{St}$) in einer ersten (56) und einer zweiten Ansteuerschaltung (58) erzeugt wird, deren Ausgänge gemeinsam mit der Basis des Transistors (52) verbunden ist.

5. Schaltungsanordnung nach Anspruch 4, dadurch gekennzeichnet, dass die erste Ansteuerschaltung (56) durch eine Schwellwertschaltung gebildet ist, deren Eingang eine vom Strahlstrom ($I_S$) der Bildröhre (20) abhängige Spannung zugeführt ist.

6. Schaltungsanordnung nach Anspruch 4, dadurch gekennzeichnet, dass die zweite Ansteuerschaltung (58) ein RC-Glied (64, 66) besitzt, welchem Impulse (62) zugeführt sind, und dass die Impulsbreite ($t_1$) der Impulse (62) veränderbar ist.

7. Schaltungsanordnung nach einem der vorhergehenden Ansprüche 4-6, dadurch gekennzeichnet, dass der Ausgangsspannung der ersten Ansteuerschaltung (56) die Schalterfunktion des Transistors (52) und der Ausgangsspannung der zweiten Ansteuerschaltung (58) die Spannungseinstellfunktion zur Einstellung der Schirmgitterspannung (U$_{G2}$) zugeordnet ist.

8. Schaltungsanordnung nach einem der vorhergehenden Ansprüche 1-7, dadurch gekennzeichnet, dass die einstellbare Schirmgitterspannung (U$_{G2}$) mittels eines Spannungsteilers (72) auf der Sekundärseite eines Dioden-Split-Transformators (12) abgegriffen ist.

9. Schaltungsanordnung nach Anspruch 8, dadurch gekennzeichnet, dass der Transistor (52) und zumindest ein Teil des Spannungsteilers (72) Bestandteil einer Dickschicht-Schaltung (78) sind.


## Claims

1. Circuit layout for a picture tube with a screen grid to which an adjustable screen grid voltage is applied, characterized in that, to exert an influence on the screen grid voltage (U$_{G2}$), an active element (50) is provided, exposed to a control voltage (U$_{ST}$), which, depending on the amplitude of the control voltage (U$_{ST}$) acts both as a voltage divider and, if the beam current value is exceeded, as an effective electronic switch.

2. Circuit layout according to Claim 1, characterized in that the active element (50) is a transistor (52), to the base of which the control voltage (U$_{ST}$) is applied.

3. Circuit layout according to Claim 2, characterized in that the emitter of the transistor (52) is at earth potential and the collector electrode is connected with the screen grid voltage supply.

4. Circuit layout according to one of the preceding Claims 1-3, characterized in that the control voltage (U$_{ST}$) is generated in a first (56) and a second (58) drive circuit, the outputs of which are connected in common to the base of the transistor (52).

5. Circuit layout according to Claim 4, characterized in that the first drive circuit (56) is formed by a threshold circuit, to the input of which a voltage dependent on the beam current (IS) of the picture tube (20) is applied.

6. Circuit layout according to Claim 4, characterized in that, the second drive circuit (58) has an RC member (64, 66), to which pulses (62) are applied, and that the pulse width (t$_1$) of the pulse (62) is variable.

7. Circuit layout according to one of preceding Claims 4-6, characterized in that the switching function of the transistor (52) is allocated to the output voltage of the first drive circuit (56) and the voltage adjustment function for setting the sreen grid voltage (U$_{G2}$) is allocated to the second drive circuit (58) of the voltage adjustment function.

8. Circuit layout according to one of the preceding Claims 1-7, characterized in that the adjustable screen grid voltage (U$_{G2}$) is tapped by a voltage divider (72) on the secondary side of a diode split transformer (12).

9. Circuit layout according to Claim 8, characterized in that the transistor (52) and at least one part of the voltage divider 72 form a component of a thick film circuit (78).


## Revendications

1. Circuit pour tube cathodique comportant une grille recevant une tension de grille réglable, circuit caractérisé en ce qu'il comporte un élément (50) actif recevant une tension de commande (U$_{ST}$) pour influencer la tension de grille (U$_{G2}$), élément qui en fonction de l'amplitude de la tension de commande (U$_{ST}$) est un organe de réglage de tension et en cas de dépassement du courant du faisceau constitue un commutateur électronique.

2. Circuit selon la revendication 1, caractérisé en ce que l'élément actif (50) est un transistor (52) dont la base reçoit la tension de commande (U$_{ST}$).

3. Circuit selon la revendication 2, caractérisé en ce que l'émetteur du transistor (52) est au potentiel de masse et le collecteur est relié à la tension de grille.

4. Circuit selon l'une des revendications précédentes 1-3, caractérisé en ce que la tension de commande (U$_{ST}$) est fournie par un premier circuit (56) et un second circuit (58), circuits dont les sorties sont reliées en commun à la base du transistor (52).

5. Circuit selon la revendication 4, caractérisé en ce que le premier circuit de commande (56) est un circuit à seuil dont l'entrée reçoit une tension dépendant de l'intensité (I$_S$) du courant du faisceau du tube cathodique (20).

6. Circuit selon la revendication 4, caractérisé en ce que le second circuit de commande (58) comporte un élément RC (64, 66) qui reçoit les impulsions (62) dont la largeur (T$_1$) est variable.

7. Circuit selon l'une des revendications précédentes 4-6, caractérisé en ce que la tension de sortie du premier circuit de commande (56) correspond à la fonction de communication du transistor (52) et la tension de sortie du second circuit de commande (58) correspond à la fonction de réglage de tension pour régler la tension de grille (U$_{G2}$).

8. Circuit selon l'une des revendications précédentes 1 à 7, caractérisé en ce que la tension de grille réglable (U$_{G2}$) est fournie par un diviseur de tension (72) du côté du secondaire d'un transformateur-diviseur à diodes (12).

9. Circuit selon la revendication 8, caractérisé en ce que le transistor (52) et au moins une partie du diviseur de tension (72) appartiennent à un circuit en couche épaisse (78).

FIG. 1
( bekannt )

FIG.4

7

**FIG. 2**

FIG. 3

FIG.5

FIG.6